# EUROPEAN PATENT APPLICATION

(11) **EP 4 365 234 A1**
(43) Date of publication of application: **08.05.2024**
(21) Application number: 22833049.4
(22) Date of filing: 24.06.2022
(51) Int. Cl.: C08L 67/00, C08G 63/189, C08L 27/12

(54) **RESIN COMPOSITION AND MOLDED BODY**

(30) Priority: 28.06.2021 JP 2021106560
(71) Applicant: Sumitomo Chemical Company, Limited, Tokyo 103-6020 (JP)
(72) Inventor: SOMA Hidenori, Utsunomiya-shi, Tochigi 329-1105 (JP)
(74) Representative: Vossius & Partner Patentanwälte Rechtsanwälte mbB
(86) International application number: PCT/JP2022/025395
(87) International publication number: WO 2023/276902

(57) **Abstract**

Provided is a resin composition comprising: a liquid crystal polyester resin; and a fluororesin, wherein the fluororesin has an average particle diameter of 20 µm or less as determined by image analysis of an SEM image of the fluororesin, and when an endothermic peak is measured with heating at a rate of 1 °C/min using a differential scanning calorimeter, the fluororesin exhibits a first endothermic peak temperature of 328°C or higher and a second endothermic peak temperature of 325°C or lower.

## Description

### Technical Field

The present invention relates to a resin composition and a molded body produced by using the resin composition.

The present application claims a priority based on Japanese Patent Application No. 2021-106560, filed on June 28, 2021 in Japan, and a content thereof is incorporated by reference herein.

### Background Art

A liquid crystal polyester resin is known to have high flowability, heat resistance, and dimensional precision, and is used in various fields such as electric, electronic, machinery, optical device, automobile, aircraft, and medical fields.

A resin composition in which a fluororesin such as polytetrafluoroethylene is contained into the liquid crystal polyester resin is known to have improved mold-releasability from a mold in molding and frictional wearing resistance.

For example, Patent Literature 1 discloses a liquid crystal polyester resin composition comprising a low molecular-weight fluorocarbon polymer having a flow starting temperature of 350°C or lower at 0.2 to 50 parts by weight based on 100 parts by weight of a liquid crystal polyester resin. It is disclosed that this liquid crystal polyester resin composition yields excellent dispersibility, specifically dispersibility of the fluororesin component, and appearance, mechanical strength, and sliding property of a resin molded body using the resin composition becomes good.

### Citation List

### Patent Literature

Patent Literature 1 : Japanese Patent Laid-Open No. 2001-26699

### Summary of Invention

### Problem to be Solved by Invention

In recent years, use of a molded body using the liquid crystal polyester resin is in progress in the field of transportation equipment including automobiles and aircrafts. For application in such a filed, a liquid crystal polyester resin composition exhibiting a higher sliding property is required.

The conventional liquid crystal polyester resin composition disclosed in Patent Literature 1 has an insufficient level of the required sliding property.

The present invention has been made in view of the above circumstances, and an object of the present invention is to provide: a resin composition that can further improve the sliding property; and a molded body produced by using the resin composition.

### Means to Solve the Problem

To solve the above problem, the present invention adopts the following constitutions.
[1] A resin composition comprising: a liquid crystal polyester resin; and a fluororesin, wherein the fluororesin has an average particle diameter of 20 µm or less as determined by image analysis of an SEM image of the fluororesin, and when an endothermic peak is measured with heating at a rate of 1 °C/min using a differential scanning calorimeter, the fluororesin exhibits a first endothermic peak temperature of 328°C or higher and a second endothermic peak temperature of 325°C or lower.
[2] The resin composition according to [1], wherein the first endothermic peak temperature is 328°C or higher and 333°C or lower, and the second endothermic peak temperature is 320°C or higher and 325°C or lower.
[3] The resin composition according to [1] or [2], wherein the fluororesin comprises a first fluororesin that exhibits the first endothermic peak temperature and a second fluororesin that exhibits the second endothermic peak temperature.
[4] The resin composition according to any one of [1] to [3], wherein the liquid crystal polyester resin has a repeating unit having a 2,6-naphthylene group.
[5] The resin composition according to any one of [1] to [4], further comprising a filler.
[6] The resin composition according to any one of [1] to [5], wherein a content of the liquid crystal polyester resin is 70 to 98 % by mass based on a total amount of the resin composition, and a content of the fluororesin is 2 to 30 % by mass based on the total amount of the resin composition.
[7] A molded body produced by using the resin composition according to any one of [1] to [6].

### Effects of Invention

According to the present invention, a resin composition that can further improve a sliding property and a molded body produced by using the resin composition can be provided.

### Brief Description of Drawings

[Figure 1] Figure 1 is measurement results of endothermic peaks of a fluororesin in a pellet-shaped resin composition of Example 1.
[Figure 2] Figure 2 is an SEM image of a cross section of the pellet-shaped resin composition of Example 1.
[Figure 3] Figure 3 is an SEM image of a cross section of a pellet-shaped resin composition of Comparative Example 1.
[Figure 4] Figure 4 is an SEM image of a cross section of a pellet-shaped resin composition of Comparative Example 2.
[Figure 5] Figure 5 is an SEM image of a cross section of a pellet-shaped resin composition of Comparative Example 5.
[Figure 6] Figure 6 is an SEM image of a cross section of a pellet-shaped resin composition of Comparative Example 6.

### Embodiments for Carrying out Invention

### (Resin Composition)

A resin composition of the present embodiment comprises: a liquid crystal polyester resin; and a fluororesin, wherein the fluororesin has an average particle diameter of 20 µm or less as determined by image analysis of an SEM image of the fluororesin, and when an endothermic peak is measured with heating at a rate of 1 °C/min using a differential scanning calorimeter, the fluororesin exhibits a first endothermic peak temperature of 328°C or higher and a second endothermic peak temperature of 325°C or lower.

The "resin composition" herein refers to a powder mixture obtained by mixing the liquid crystal polyester resin, the fluororesin, and other components as necessary, or a melted product obtained by melt-kneading the powder mixture.

The "resin composition" is typically the melted product, and examples of a specific shape thereof include a pellet.

### [Average Particle Diameter of Fluororesin in Resin Composition]

The average particle diameter of the fluororesin in the resin composition of the present embodiment can be determined by image analysis of the SEM image.

For example, when the resin composition of the present embodiment is pellet-shaped, the pellet is subjected to a cross-sectional process treatment of the pellet-shaped resin composition by using a cross-sectional sample producing apparatus ("Cross-Section Polisher SM-09010", manufactured by JEOL Ltd.) under a condition of an acceleration voltage of 4.5 kV for 20 hours. Then, a cross-sectional image of the pellet-shaped resin composition is photographed by using a scanning electron microscope ("S-4800", manufactured by Hitachi High-Tech Corporation) under a condition of an acceleration voltage of 10 kV. The cross-sectional image is photographed by using an attached YAG-type backscattered electron detector under a condition of an observation magnification of 500. Then, an image analysis software ("WinROOF" Ver. 3.54, manufactured by MITANI CORPORATION) is used to determine the average particle diameter of the fluororesin in the resin composition by the following analytical method.

### «Analytical Method»

The obtained cross-sectional image is used and subjected to a median treatment with a filter size of 5×5, and then a region comprising the liquid crystal polyester resin and a region comprising the fluororesin are subjected to a binarizing treatment. A threshold value of the binarizing treatment is set to a value such that the fluororesin and other components can be distinguished by visually observation of the image. The threshold value of the binarizing treatment is set to 100 to 130, for example. The image after the treatment is used to remove noise and a region with a cut image on the end thereof, and then 150 circle-equivalent diameters of the fluororesin regions are measured. An average value of the obtained measured values is calculated and specified as the average particle diameter of the fluororesin in the resin composition.

The average particle diameter of the fluororesin in the resin composition of the present embodiment is 20 µm or less, preferably 15 µm or less, more preferably 10 µm or less, and further preferably 8 µm or less.

When the average particle diameter of the fluororesin in the resin composition of the present embodiment is 20 µm or less, the fluororesin is favorably dispersed in the resin composition, and thereby the molded body produced by using the resin composition has a good sliding property. When the average particle diameter of the fluororesin in the resin composition is less than or equal to the above preferable upper limit, the sliding property is more improved.

A lower limit of the average particle diameter of the fluororesin in the resin composition of the present embodiment is not particularly limited, and 0.1 µm or more, for example.

The average particle diameter of the fluororesin in the resin composition of the present embodiment can be regulated by, for example, a type of the liquid crystal polyester resin used in combination, a type of the fluororesin, a content ratio between the liquid crystal polyester resin and the fluororesin, and the like. The average particle diameter of the fluororesin can also be regulated by comprising a filler described later to increase a shearing force during the melt-kneading. The average particle diameter can also be regulated by conditions for manufacturing the pellets and the molded body.

### [Endothermic Peak Temperature of Fluororesin in Resin Composition]

The fluororesin in the resin composition of the present embodiment exhibits a first endothermic peak temperature of 328°C or higher and a second endothermic peak temperature of 325°C or lower when the endothermic peak is measured with heating at a rate of 1 °C/min by using a differential scanning calorimeter (for example, a trade name "DSC-50", manufactured by SHIMADZU CORPORATION).

Here, the endothermic peak measured with the differential scanning calorimeter indicates heat absorption due to melting of the fluororesin (melting point). Since melting point is significantly affected by a molecular weight, when the resin composition of the present embodiment comprises the same type of fluororesins, it can be understood that fluororesins having different molecular weights are contained.

In the resin composition of the present embodiment, comprising a fluororesin that exhibits the first endothermic peak temperature, that is, a fluororesin having a higher molecular weight can further improve durability of the molded body produced by using the resin composition.

Comprising a fluororesin that exhibits the second endothermic peak temperature, that is, a fluororesin having a lower molecular weight can further improve the dispersibility of the fluororesin in the molded body produced by using the resin composition.

The endothermic peak of the fluororesin in the resin composition can be measured by decomposing the resin other than the fluororesin to extract only the fluororesin. For example, when the resin composition of the present embodiment is a resin composition composed of the liquid crystal polyester resin and the fluororesin, the measurement can be performed by amine decomposition of the liquid crystal polyester resin to extract only the fluororesin.

The first endothermic peak temperature of the fluororesin in the resin composition of the present embodiment is preferably 328°C or higher and 350°C or lower, more preferably 328°C or higher and 340°C or lower, and further preferably 328°C or higher and 333°C or lower.

The second endothermic peak temperature of the fluororesin in the resin composition of the present embodiment is preferably 300°C or higher and 325°C or lower, more preferably 310°C or higher and 325°C or lower, and further preferably 320°C or higher and 325°C or lower.

When the first endothermic peak temperature and second endothermic peak temperature of the fluororesin in the resin composition of the present embodiment are within the above preferable ranges, a synergistic effect (improvement of the sliding property derived from achievement of both the dispersibility and the durability) by combination of a fluororesin that exhibits the first endothermic peak temperature and a fluororesin that exhibits the second endothermic peak temperature is more easily obtained.

The first endothermic peak temperature and second endothermic peak temperature of the fluororesin in the resin composition of the present embodiment can be regulated by, for example, a type and structure of the fluororesin, typically by comprising a plurality of the fluororesins having different specific molecular weights.

The fluororesin in the resin composition of the present embodiment may be any as long as it exhibits at least the first endothermic peak temperature of 328°C or higher and the second endothermic peak temperature of 325°C or lower, and may exhibit another endothermic peak temperature.

### <Liquid Crystal Polyester Resin>

The liquid crystal polyester resin of the present embodiment is not particularly limited as long as it is a polyester resin that exhibits a liquid-crystalline property in a molten state. The liquid crystal polyester resin of the present embodiment may be a liquid crystal polyester amide, a liquid crystal polyester ether, a liquid crystal polyester carbonate, a liquid crystal polyester imide, and the like.

A flow starting temperature of the liquid crystal polyester resin of the present embodiment is preferably 250°C or higher, more preferably 270°C or higher, and further preferably 290°C or higher.

The flow starting temperature of the liquid crystal polyester resin of the present embodiment is preferably 400°C or lower, more preferably 360°C or lower, and further preferably 330°C or lower.

For example, the flow starting temperature of the liquid crystal polyester resin of the present embodiment is preferably 250°C or higher and 400°C or lower, more preferably 270°C or higher and 360°C or lower, and further preferably 290°C or higher and 330°C or lower.

When the flow starting temperature of the liquid crystal polyester resin of the present embodiment is within the above preferable range, the dispersibility of the fluororesin used in combination is further improved.

The flow starting temperature herein refers to a temperature, which is also called as a flow temperature or a fluidizing temperature, indicating the molecular weight of the liquid crystal polyester resin (see "Liquid Crystal Polymer -Synthesis, Molding, and Application-", edited by Naoyuki Koide, CMC Publishing Co., Ltd., June 5, 1987, p. 95).

A method for measuring the flow starting temperature is specifically as follows. Measured is a temperature at which a viscosity of 4800 Pa·s (48000 poise) is exhibited when the liquid crystal polyester resin is melted under a load of 9.8 MPa (100 kg/cm²) with heating at a rate of 4 °C/min to be extruded through a nozzle with 1 mm in inner diameter and 10 mm in length by using a capillary rheometer.

The liquid crystal polyester resin of the present embodiment is preferably a wholly aromatic liquid crystal polyester, which is composed by using only an aromatic compound as raw material monomer.

Typical examples of the liquid crystal polyester resin of the present embodiment include: a liquid crystal polyester resin formed by polymerizing (condensation-polymerizing) an aromatic hydroxycarboxylic acid, an aromatic dicarboxylic acid, and at least one compound selected from the group consisting of an aromatic diol, an aromatic hydroxyamine, and an aromatic diamine; a liquid crystal polyester resin formed by polymerizing a plurality of aromatic hydroxycarboxylic acids; a liquid crystal polyester resin formed by polymerizing an aromatic dicarboxylic acid and at least one compound selected from the group consisting of an aromatic diol, an aromatic hydroxyamine, and an aromatic diamine; and a liquid crystal polyester resin formed by polymerizing a polyester such as polyethylene terephthalate and an aromatic hydroxycarboxylic acid.

Here, a part or all of the aromatic hydroxycarboxylic acid, the aromatic dicarboxylic acid, the aromatic diol, the aromatic hydroxyamine, and the aromatic diamine may be each independently replaced by a polymerizable derivative thereof.

Examples of the polymerizable derivatives of compounds having a carboxyl group, such as the aromatic hydroxycarboxylic acid and the aromatic dicarboxylic acid, include: an ester obtained by converting a carboxyl group into an alkoxycarbonyl group or an aryloxycarbonyl group; an acid halide obtained by converting a carboxyl group into a haloformyl group; and an acid anhydride obtained by converting a carboxyl group into an acyloxycarbonyl group.

Examples of the polymerizable derivatives of compounds having a hydroxyl group, such as the aromatic hydroxycarboxylic acid, the aromatic diol, and the aromatic hydroxyamine, include an acylated product obtained by converting a hydroxyl group to an acyloxyl group via acylation.

Examples of the polymerizable derivatives of the compound having an amino group, such as the aromatic hydroxyamine and the aromatic diamine, include an acylated product obtained by converting an amino group to an acylamino group via acylation.

Among the above, the liquid crystal polyester resin used in the present embodiment preferably has a repeating unit having a 2,6-naphthylene group from the viewpoint of capability of further improvement of the dispersibility of the fluororesin.

When the liquid crystal polyester resin used in the present embodiment has the repeating unit having the 2,6-naphthylene group, the number of the repeating units having the 2,6-naphthylene group is preferably 40% or more, more preferably 50% or more, and further preferably 60% or more, based on a total number (100%) of all the repeating units of the liquid crystal polyester resin.

The number of the repeating units having the 2,6-naphthylene group is preferably 90% or less, more preferably 85% or less, and further preferably 80% or less, based on the total number (100%) of all the repeating units of the liquid crystal polyester resin.

For example, the number of the repeating units having the 2,6-naphthylene group is preferably 40% or more and 90% or less, more preferably 50% or more and 85% or less, and further preferably 60% or more and 80% or less, based on the total number (100%) of all the repeating units of the liquid crystal polyester resin.

The number of each repeating unit herein can be determined by an analytical method disclosed in Japanese Patent Laid-Open No. 2000-19168, for example.

Specifically, the liquid crystal polyester resin is reacted with a lower alcohol having 1 to 3 carbon atoms in a supercritical state to depolymerize the liquid crystal polyester resin into the monomer to derive the repeating unit, and the monomer to derive each repeating unit obtained as the depolymerized product is quantified by liquid chromatography to be able to calculate the number of each repeating unit.

The liquid crystal polyester resin of the present embodiment preferably has a repeating unit represented by the following formula (1) (hereinafter, also referred to as "repeating unit (1)"), and more preferably has the repeating unit (1), a repeating unit represented by the following formula (2) (hereinafter, also referred to as "repeating unit (2)"), and a repeating unit represented by the following formula (3) (hereinafter, also referred to as "repeating unit (3)").

(1) -O-Ar¹-CO-
(2) -CO-Ar²-CO-
(3) -X-Ar³-Y-

[In the formulae, Ar¹ represents a phenylene group, a naphthylene group, or a biphenylylene group. Ar² and Ar³ each independently represent a phenylene group, a naphthylene group, a biphenylylene group, or a group represented by the following formula (4). X and Y each independently represent an oxygen atom or an imino group (-NH-). A hydrogen atom in the group represented by Ar¹, Ar², or Ar³ may be each independently replaced with a halogen atom, an alkyl group, or an aryl group.]

(4) -Ar⁴-Z-Ar⁵-

[In the formula, Ar⁴ and Ar⁵ each independently represent a phenylene group or a naphthylene group. Z represents an oxygen atom, a sulfur atom, a carbonyl group, a sulfonyl group, or an alkylidene group.]

Examples of the halogen atom that can replace one or more hydrogen atoms in the group represented by Ar¹, Ar², or Ar³ include a fluorine atom, a chlorine atom, a bromine atom, and an iodine atom.

Examples of the alkyl group that can replace one or more hydrogen atoms in the group represented by Ar¹, Ar², or Ar³ include a methyl group, an ethyl group, an n-propyl group, an isopropyl group, an n-butyl group, an isobutyl group, a s-butyl group, a t-butyl group, an n-hexyl group, a 2-ethylhexyl group, an n-octyl group, and an n-decyl group. The number of carbon atoms thereof is preferably 1 to 10.

Examples of the aryl group that can replace one or more hydrogen atoms in the group represented by Ar¹, Ar², or Ar³ include a phenyl group, an o-tolyl group, a m-tolyl group, a p-tolyl group, a 1-naphthyl group, and a 2-naphthyl group. The number of carbon atoms thereof is preferably 6 to 20.

When a hydrogen atom in the group represented by Ar¹, Ar², or Ar³ is replaced by the aforementioned group, the number of the replacements is preferably 1 or 2, and more preferably 1.

Examples of the alkylidene group of Z in the formula (4) include a methylene group, an ethylidene group, an isopropylidene group, an n-butylidene group, and a 2-ethylhexylidene group. The number of carbon atoms thereof is preferably 1 to 10.

The repeating unit (1) is a repeating unit derived from the predetermined hydroxycarboxylic acid. The repeating unit (1) is preferably a repeating unit in which Ar¹ represents a 1,4-phenylene group (a repeating unit derived from p-hydroxybenzoic acid) and a repeating unit in which Ar¹ represents a 2,6-naphthylene group (a repeating unit derived from 6-hydroxy-2-naphthoic acid).

The term "derived" herein means a change in a chemical structure of a functional group that contributes to the polymerization, for polymerization of the raw material monomer, and no change in other structures.

The repeating unit (2) is a repeating unit derived from the predetermined aromatic dicarboxylic acid. The repeating unit (2) is preferably a repeating unit in which Ar² represents a 1,4-phenylene group (a repeating unit derived from terephthalic acid), a repeating unit in which Ar² represents a 1,3-phenylene group (a repeating unit derived from isophthalic acid), a repeating unit in which Ar² represents a 2,6-naphthylene group (a repeating unit derived from 2,6-naphthalenedicarboxylic acid), and a repeating unit in which Ar² represents a diphenyl ether-4,4'-diyl group (a repeating unit derived from diphenyl ether-4,4'-dicarboxylic acid). The repeating unit (2) is more preferably the repeating unit in which Ar² represents a 1,4-phenylene group, the repeating unit in which Ar² represents a 1,3-phenylene group, and the repeating unit in which Ar² represents a 2,6-naphthylene group.

The repeating unit (3) is a repeating unit derived from the predetermined aromatic diol, aromatic hydroxyl amine, or aromatic diamine. The repeating unit (3) is preferably a repeating unit in which Ar³ represents a 1,4-phenylene group (a repeating unit derived from hydroquinone, p-aminophenol, or p-phenylenediamine) and a repeating unit in which Ar³ represents a 4,4'-biphenylylene group (a repeating unit derived from 4,4'-dihydroxybiphenyl, 4-amino-4'-hydroxybiphenyl, or 4,4'-diaminobiphenyl).

The number of the repeating units (1) is preferably 30% or more and 80% or less, more preferably 40% or more and 70% or less, and further preferably 45% or more and 70% or less, based on the total number (100%) of all the repeating units.

The number of the repeating units (2) is preferably 35% or less, more preferably 10% or more and 35% or less, and further preferably 150 or more and 30% or less, based on the total number (100%) of all the repeating units.

The number of the repeating units (3) is preferably 35% or less, more preferably 10% or more and 35% or less, and further preferably 150 or more and 30% or less, based on the total number (100%) of all the repeating units.

A ratio between the number of the repeating units (2) and the number of the repeating units (3) is, with representing [the number of the repeating units (2)] / [the number of the repeating units (3)], preferably 0.9/1 to 1/0.9, more preferably 0.95/1 to 1/0.95, and further preferably 0.98/1 to 1/0.98.

The liquid crystal polyester resin of the present embodiment may have two or more of each of the repeating units (1) to (3). Although the liquid crystal polyester resin may have a repeating unit other than the repeating units (1) to (3), a content thereof is preferably 10% or less, and more preferably 5% or less, based on the total number (100%) of all the repeating units.

The liquid crystal polyester resin of the present embodiment preferably has, as the repeating unit (3), a repeating unit in which X and Y each represent an oxygen atom, that is, a repeating unit derived from the predetermined aromatic diol because a melt viscosity is likely to be low, and more preferably has, as the repeating unit (3), only the repeating unit in which X and Y each represent an oxygen atom.

The liquid crystal polyester resins of the present embodiment may be used singly or in combination of two or more, and preferably in combination of two or more.

Specifically, a liquid crystal polyester resin A comprising repeating units having a 2,6-naphthylene group (hereinafter, referred to as "LCPA") and a liquid crystal polyester resin B comprising no repeating units having a 2,6-naphthylene group (hereinafter, referred to as "LCPB") are preferably used in combination.

A more preferable LCPA, among others, is a liquid crystal polyester resin having the repeating unit (1), the repeating unit (2), and the repeating unit (3), in which any of the repeating units (1) to (3) has a 2,6-naphthylene group.

A more preferable LCPB, among others, is a liquid crystal polyester resin having the repeating unit (1), the repeating unit (2), and the repeating unit (3), in which none of the repeating units (1) to (3) has a 2,6-naphthylene group.

When the liquid crystal polyester resin of the present embodiment comprises the LCPA and the LCPB, a mass ratio between a content of the LCPA and a content of the LCPB (a content of the LCPA : a content of the LCPB) is preferably 1:99 to 99:1, and more preferably 5:95 to 30:70.

The liquid crystal polyester resin of the present embodiment is preferably manufactured by melt-polymerizing a raw material monomer corresponding to the repeating unit to constitute the liquid crystal polyester resin, and solid-phase-polymerizing the obtained polymerized product. This can manufacture a high molecular-weight liquid crystal polyester resin having high heat resistance, strength, and rigidity with good operability.

The melt polymerization may be performed in the presence of a catalyst. Examples of this catalyst include: metal compounds such as magnesium acetate, tin (II) acetate, tetrabutyl titanate, lead acetate, sodium acetate, potassium acetate, and antimony trioxide; and nitrogen-containing heterocyclic compounds such as 4-(dimethylamino)pyridine and 1-methylimidazole, and the nitrogen-containing heterocyclic compounds are preferably used.

A content of the liquid crystal polyester resin in the resin composition of the present embodiment is preferably 30 % by mass or more, more preferably 40 % by mass or more, and further preferably 50 % by mass or more, based on the total amount of the resin composition.

Meanwhile, the content of the liquid crystal polyester resin is preferably 95 % by mass or less, more preferably 90 % by mass or less, and further preferably 85 % by mass or less, based on the total amount of the resin composition.

For example, the content of the liquid crystal polyester resin is preferably 30 % by mass or more and 95 % by mass or less, more preferably 40 % by mass or more and 90 % by mass or less, and further preferably 50 % by mass or more and 85 % by mass or less, based on the total amount of the resin composition.

### <Fluororesin>

Specific examples of the fluororesin in the resin composition of the present embodiment include polytetrafluoroethylene (PTFE), tetrafluoroethylene-hexafluoropropylene copolymer (FEP), polychlorotrifluoroethylene (PCTFE), ethylene-tetrafluoroethylene copolymer, ethylene-chlorotrifluoroethylene copolymer, polyvinylidene fluoride (PVDF), and tetrafluoroethylene-perfluoroalkyl vinyl ether copolymer (perfluoroalkoxyalkane, PFA).

Among the above, the fluororesin in the resin composition of the present embodiment is preferably PTFE from the viewpoint of further improvement of the sliding property of the molded body produced by using the resin composition.

As noted above, the fluororesin in the resin composition of the present embodiment is composed of a fluororesin comprising a first fluororesin that exhibits a first endothermic peak temperature and a second fluororesin that exhibits a second endothermic peak temperature, and comprises a first fluororesin that exhibits a first endothermic peak temperature and a second fluororesin that exhibits a second endothermic peak temperature which typically have different molecular weights.

More specifically, the resin composition of the present embodiment preferably comprises the first fluororesin having a number-average molecular weight (Mn) of 30000 to 50000 and the second fluororesin having a number-average molecular weight (Mn) of 10000 to 25000.

### - Method for Measuring Number-Average Molecular Weight

The number-average molecular weight (Mn) herein is a number-average molecular weight (Mn) determined by a method disclosed in J. Appl. Polym. Sci. 1973, 17, 3253. Specifically, the number-average molecular weight (Mn) means a value calculated from a heat of crystallization (ΔHc: cal/g) determined by using a differential scanning calorimeter (trade name: DSC-60 Plus, manufactured by SHIMADZU CORPORATION) by the following formula (m-1). Here, the heat of crystallization (ΔHc) is a heat determined from an area of a crystallization peak in a DSC curve. Number-average molecular weight (Mn) = 2.1 × 1010ΔHC- 5.16

The first fluororesin and the second fluororesin contained in the resin composition of the present embodiment are both preferably PTFE.

A content of the fluororesin in the resin composition of the present embodiment is preferably 1 % by mass or more, more preferably 10 % by mass or more, and further preferably 15 % by mass or more, based on the total amount of the resin composition.

Meanwhile, the content of the fluororesin is preferably 40 % by mass or less, more preferably 35 % by mass or less, and further preferably 30 % by mass or less, based on the total amount of the resin composition.

For example, the content of the fluororesin is preferably 1 % by mass or more and 40 % by mass or less, more preferably 10 % by mass or more and 35 % by mass or less, and further preferably 15 % by mass or more and 30 % by mass or less, based on the total amount of the resin composition.

When the content of the fluororesin in the resin composition of the present embodiment based on the total amount of the resin composition is within the above preferable range, the sliding property of the molded body produced by using the resin composition is further improved.

The content of the fluororesin in the resin composition of the present embodiment is preferably 10 parts by mass or more, more preferably 15 parts by mass or more, and further preferably 20 parts by mass or more, based on 100 parts by mass of the liquid crystal polyester resin.

Meanwhile, the content of the fluororesin is preferably 50 parts by mass or less, more preferably 45 parts by mass or less, and further preferably 40 parts by mass or less, based on 100 parts by mass of the liquid crystal polyester resin.

For example, the content of the fluororesin is preferably 10 parts by mass or more and 50 parts by mass or less, more preferably 15 parts by mass or more and 45 parts by mass or less, and further preferably 20 parts by mass or more and 40 parts by mass or less, based on 100 parts by mass of the liquid crystal polyester resin.

When the content of the fluororesin in the resin composition of the present embodiment based on 100 parts by mass of the liquid crystal polyester resin is within the above preferable range, the sliding property of the molded body produced by using the resin composition is further improved.

### <Optional Components>

The resin composition of the present embodiment may comprise optional components other than the aforementioned liquid crystal polyester resin and fluororesin. Examples of the optional components include a filler, a resin other than the aforementioned liquid crystal polyester resin and fluororesin, a fire retardant, a conductivity-imparting agent, a crystal nucleating agent, an ultraviolet ray absorbent, an antioxidant, a damping agent, an antimicrobial agent, an insecticide, a deodorant, a coloring inhibitor, a thermal stabilizer, a mold-releasing agent, an antistatic agent, a plasticizer, a lubricant, a dye, a foaming agent, a foaming inhibitor, a viscosity regulator, and a surfactant.

### «Filler»

Examples of the filler include a fibrous filler, a plate filler, a spherical filler, a powder filler, and an irregular-shaped filler.

Examples of the fibrous filler include a glass fiber, a PAN-based carbon fiber, a pitch-based carbon fiber, a silica-alumina fiber, a silica fiber, an alumina fiber, other ceramic fibers, a liquid crystal polymer (LCP) fiber, an aramid fiber, and a polyethylene fiber. Examples thereof also include whiskers from wollastonite, and potassium titanate fibers.

Examples of the plate filler include talc, mica, graphite, and wollastonite.

The plate filler may be a surface-treated plate filler or may be a untreated plate filler.

Examples of the mica include: natural micas such as muscovite, phlogopite, fluorine phlogopite, and four-silicon mica; and artificially manufactured synthetic micas.

Examples of the spherical filler include a glass bead and a glass balloon.

Examples of the powder filler include calcium carbonate, dolomite, cray barium sulfate, titanium oxide, carbon black, conductive carbon, and silica fine particles.

Examples of the irregular-shaped filler include a glass flake and a glass fiber with an irregular-shaped cross section.

Among the above, the filler in the resin composition of the present embodiment is preferably the plate filler or the powder filler, more preferably the plate filler or titanium oxide, and further preferably mica or titanium oxide.

A content of the filler in the resin composition of the present embodiment is preferably 1 % by mass or more and 40 % by mass or less, more preferably 10 % by mass or more and 35 % by mass or less, and further preferably 15 % by mass or more and 30 % by mass or less, based on the total amount of the resin composition.

When the content of the filler in the resin composition of the present embodiment based on the total amount of the resin composition is within the above preferable range, the sliding property of the molded body produced by using the resin composition is further improved.

The content of the filler in the resin composition of the present embodiment is preferably 10 parts by mass or more and 50 parts by mass or less, more preferably 20 parts by mass or more and 45 parts by mass or less, and further preferably 30 parts by mass or more and 40 parts by mass or less, based on 100 parts by mass of the liquid crystal polyester resin.

When the content of the filler in the resin composition of the present embodiment based on100 parts by mass of the liquid crystal polyester resin is within the above preferable range, the sliding property of the molded body produced by using the resin composition is further improved.

### <<Resin Other Than Liquid Crystal Polyester Resin and Fluororesin>>

Examples of the resin other than the liquid crystal polyester resin and the fluororesin include: polyolefin resins, such as polyethylene, polypropylene, polybutadiene, and polymethylpentene; vinyl resins, such as vinyl chloride, vinylidene chloride, vinyl acetate, and polyvinyl alcohol; polystyrene resins, such as polystyrene, acrylonitrile-styrene resin (AS resin), and acrylonitrile-butadiene-styrene resin (ABS resin); polyamide resins, such as polyamide 6 (nylon 6), polyamide 66 (nylon 66), polyamide 11 (nylon 11), polyamide 12 (nylon 12), polyamide 46 (nylon 46), polyamide 610 (nylon 610), polytetramethylene terephthalamide (nylon 4T), polyhexamethylene terephthalamide (nylon 6T), polymetaxylylene adipamide (nylon MXD6), polynonamethylene terephthalamide (nylon 9T), and polydecamethylene terephthalamide (nylon 10T); polyester resins, such as polyethylene terephthalate, polyethylene naphthalate, polybutylene terephthalate, and polytrimethylene terephthalate; polysulfone resins, such as a modified polysulfone, polyether sulfone, polysulfone, and polyphenylsulfone; polyphenylene sulfides, such as a linear polyphenylene sulfide, a crosslinked polyphenylene sulfide, and a semi-crosslinked polyphenylene sulfide; polyether ketones, such as polyether ketone, polyether ether ketone, and polyether ketone ketone; polycarbonates; polyphenylene ethers; and polyimide resins, such as a thermoplastic polyimide, a polyamideimide, and a polyetherimide.

The resin composition of the present embodiment may comprise the resin other than the liquid crystal polyester resin and the fluororesin within a range not impairing the effect of the present invention.

A content of the resin other than the liquid crystal polyester resin and the fluororesin is preferably 10 % by mass or less, more preferably 5 % by mass or less, and further preferably 1 % by mass or less, based on the total amount of the resin composition. The resin composition of the present embodiment particularly preferably comprises no resin other than the liquid crystal polyester resin and the fluororesin.

The resin composition of the present embodiment, which has been described above, comprises: a liquid crystal polyester resin; and a fluororesin which has an average particle diameter of 20 µm or less and exhibits a first endothermic peak temperature of 328°C or higher and a second endothermic peak temperature of 325°C or lower.

In a conventional resin composition comprising a low molecular-weight fluororesin, the low molecular-weight fluororesin typically has a problem of low durability compared with a high molecular-weight fluororesin. When a molded body is produced from the resin composition comprising the low molecular-weight fluororesin, the fluororesin has a problem of easy removal from the molded body.

The high molecular-weight fluororesin has high durability, but when a molded body is produced from a resin composition comprising the high molecular-weight fluororesin, it is difficult to improve dispersibility of the fluororesin in the molded body. Thus, there is a problem that braking proceeds from an interface between the fluororesin and a resin other than the fluororesin contained in the resin composition, which causes difficulty of improvement of the durability of the molded body.

Meanwhile, the fluororesin in the resin composition of the present embodiment comprises a plurality of fluororesins having different specific endothermic peak temperatures, typically having different specific molecular weights, and is regulated to have an average particle diameter of 20 µm or less. Thus, the improvement of the durability and dispersibility is attained.

In addition, the resin composition of the present embodiment comprises the liquid crystal polyester resin having high heat resistance and mechanical strength.

Therefore, according to the resin composition of the present embodiment, the molded body having the good sliding property can be produced.

The resin composition of the present embodiment has the following aspects.
[1] A resin composition comprising: a liquid crystal polyester resin; and a fluororesin, wherein the fluororesin has an average particle diameter of 20 µm or less as determined by image analysis of an SEM image of the fluororesin, and the fluororesin comprises a first fluororesin having an endothermic peak temperature of 328°C or higher and a second fluororesin having an endothermic peak temperature of 325°C or lower when an endothermic peak is measured with heating at a rate of 1 °C/min using a differential scanning calorimeter.
[2] The resin composition according to [1], wherein the endothermic peak temperature of the first fluororesin is preferably 328°C or higher and 350°C or lower, more preferably 328°C or higher and 340°C or lower, and further preferably 328°C or higher and 333°C or lower, and
   the endothermic peak temperature of the second fluororesin is preferably 300°C or higher and 325°C or lower, more preferably 310°C or higher and 325°C or lower, and further preferably 320°C or higher and 325°C or lower.
[3] The resin composition according to [1] or [2], wherein both of the first fluororesin and the second fluororesin are PTFE.
[4] The resin composition according to any one of [1] to [3], wherein the liquid crystal polyester resin comprises: a liquid crystal polyester resin having a repeating unit having a 2,6-naphthylene group; and a liquid crystal polyester resin having no repeating unit having a 2,6-naphthylene group.
[5] The resin composition according to any one of [1] to [4], wherein the liquid crystal polyester resin comprises:
   a liquid crystal polyester resin having the aforementioned repeating unit (1), repeating unit (2), and repeating unit (3), in which any of the repeating units (1) to (3) has a 2,6-naphthylene group; and
   a liquid crystal polyester resin having the aforementioned repeating unit (1), repeating unit (2), and repeating unit (3), in which none of the repeating units (1) to (3) have a 2,6-naphthylene group.
[6] The resin composition according to any one of [1] to [5], further comprising a filler.
[7] The resin composition having a property of a limit PV value of preferably 85 MPa·m/min or more, more preferably 90 MPa-m/min or more, and further preferably 150 MPa·m/min or more when a molded body is produced by using the resin composition according to any one of [1] to [6] under the following condition and the limit PV value of the molded body is determined by using a Suzuki-type frictional wearing tester.

### [Condition for Manufacturing Molded body]

The resin composition is fed into an injection-molding machine UH1000 (manufactured by NISSEI PLASTIC INDUSTRIAL CO., LTD.) at a cylinder temperature of 340°C, and injected into a mold at a mold temperature of 120°C with an injecting speed of 20 mm/s, the number of screw rotation of 100 rpm, a holding pressure of 50 MPa, and a back pressure of 3 MPa to produce a molded body with 64 mm × 64 mm × 3 mmt.

### [Method for Measuring Limit PV Value]

On the molded body, a metal ring coated with a silicone oil having a kinematic viscosity at 25°C of 450 to 600 Pa·s is placed, and a load is gradually applied with rotating the metal ring. A load (stress) where a surface of the molded body is chipped - 20 N is determined to calculate the limit PV value (MPa·m/min) with the following formula. Limit PV value (MPa·m/min) = Stress • Test rate (40 m/min)

### <Measurement Condition>

Object material: SUS304 (Ra: 0.02 mm or less)
Measurement temperature: 25°C
Test rate: 40 m/min
Load profile: 50 N for 5 minutes, 100 N for 3 minutes, and more than 100 N with increasing the load at each 20 N to perform the test for each 1 minute
Contacting area between ring and molded body: 2.0 cm²

### (Method for Manufacturing Resin Composition)

An aspect of a method for manufacturing the resin composition of the present embodiment comprises: a step of preparing a raw material powder comprising a first liquid crystal polyester having a flow starting temperature of 320 to 340°C, a second liquid crystal polyester having a flow starting temperature of 310 to 330°C being lower than the flow starting temperature of the first liquid crystal polyester, a first fluororesin having a number-average molecular weight (Mn) of 30000 to 50000, and a second fluororesin having a number-average molecular weight (Mn) of 10000 to 25000; and a step of melt-kneading the raw material powder to obtain the resin composition (melted product).

### <First Liquid Crystal Polyester>

The first liquid crystal polyester preferably has a flow starting temperature of 280°C or higher, more preferably 280°C or higher and 400°C or lower, and further preferably 320°C or higher and 340°C or lower.

Specific examples of the first liquid crystal polyester include the LCPB.

### <Second Liquid Crystal Polyester>

The second liquid crystal polyester is a liquid crystal polyester having a flow starting temperature lower than that of the first liquid crystal polyester.

The second liquid crystal polyester preferably has a flow starting temperature of 280°C or higher, more preferably 280°C or higher and 400°C or lower, and further preferably 310°C or higher and 330°C or lower.

Specific examples of the second liquid crystal polyester include the LCPA.

The first fluororesin and the second fluororesin are same as the aforementioned first fluororesin and second fluororesin.

The step of melt-kneading the raw material powder can be performed by using an extruder, for example.

Examples of the extruder include a single-screw extruder and a double-screw extruder.

When the resin composition of the present embodiment is pellets, the obtained melted product is ejected into a strand through a circular nozzle (ejecting port), and then cut with a strand cutter to be able to obtain the pellet-shaped resin composition.

### (Molded body)

The molded body of the present embodiment is a molded body produced by using the aforementioned resin composition.

The molded body of the present embodiment can be obtained by using the resin composition with a known molding method. The method for molding the resin composition of the present embodiment is preferably a melt-molding method, and examples thereof include an injection-molding method, an extrusion method such as a T-die method and an inflation method, a compression-molding method, a blow-molding method, a vacuum-molding method, and a pressing method. Among them, the injection-molding method is preferable.

For example, when the aforementioned resin composition is used as a material to be molded and molded with the injection-molding method, the resin composition is melted, and the melted resin composition is injected into a mold by using a known injection-molding machine to be molded.

Here, in the time when the resin composition is fed into the injection-molding machine, each component may be separately fed into the injection-molding machine, a part or all of the components may be mixed in advance and fed into the injection-molding machine as a mixture, or the resin composition may be formed into pellets and then fed into the injection-molding machine.

Examples of the known injection-molding machine include TR450EH3, manufactured by Sodick Co., Ltd., and a hydraulic horizontal molding machine PS40E5ASE model, manufactured by NISSEI PLASTIC INDUSTRIAL CO., LTD.

A temperature condition for the injection molding is appropriately decided according to a type of the resin composition, and a cylinder temperature of the injection-molding machine is preferably set to a temperature 10 to 80°C higher than the flow starting temperature of the resin composition to be used.

A temperature of the mold is preferably set within a range from a room temperature (25°C) to 180°C in terms of a cooling rate of the resin composition and the productivity.

As other injection conditions, the number of screw rotation, a back pressure, an injecting speed, a holding pressure, a holding time, and the like may be appropriately regulated.

The molded body of the present embodiment can be applied for various use for which a resin composition can be commonly applied.

Examples of the molded body of the present embodiment include: electric and electronic components such as a connector, a socket, a relay component, a coil bobbin, an optical pickup, an oscillator, a printed wiring board, a circuit substrate, a semiconductor package, and computer-related components; semiconductor manufacturing process-related components, such as an IC tray and a wafer carrier; components of household electric appliance such as a VTR, a television, an iron, an air conditioner, a stereo component, a vacuum cleaner, a refrigerator, a rice cooker, and illumination appliance; illumination device components such as a lamp reflector and a lamp holder; audio goods components such as a compact disk, laser disk(R), and a speaker; communication device components such as a ferrule for an optical cable, a telephone component, a facsimile component, and a modem; components related to a copying machine and printing machine such as a separation claw and a heater holder; mechanical components such as an impeller, a fan gear, a gear, a bearing, a motor component, and a case; automobile components such as a mechanism component for an automobile, an engine component, a component in an engine room, an electrical component, and an interior component; cooking tools such as a pan for microwave cooking and heat-resistant tableware; building materials or construction materials such as thermal insulation or soundproof materials (such as a flooring material and a wall material), supporting materials (such as a beam and a pillar), and a roof material; components for an aircraft, a spacecraft, and a space apparatus; materials for radiation facilities such as a reactor; materials for marine facilities, cleaning jigs, optical device components, valves, pipes, nozzles, filters, a film, components for medical device and medical materials, components for sensors, sanitary equipment, sports goods, and leisure goods.

Since using the aforementioned resin composition, the molded body of the present embodiment described above has a good sliding property.

Since having high mechanical strength, heat resistance, and sliding property, the molded body of the present embodiment is useful specifically for automobile components. Among the automobile components, the molded body is more useful as a damper ring.

### Examples

Hereinafter, the present invention will be more specifically described with Examples, but the present invention is not limited to the following Examples.

### [Flow Starting Temperature of Liquid Crystal Polyester Resin]

First, approximately 2 g of a liquid crystal polyester resin was loaded into a cylinder equipped with a die having a nozzle with 1 mm in inner diameter and 10 mm in length by using a flow tester ("CFT-500 Model" manufactured by SHIMADZU CORPORATION).

Then, the liquid crystal polyester resin was melted with heating at a rate of 4 °C/min under a load of 9.8 MPa (100 kg/cm²), and extruded through the nozzle to measure a flow starting temperature at which a viscosity of 4800 Pa·s (48000 poise) was exhibited.

### [Manufacturing Example 1: Manufacture of Liquid Crystal Polyester Resin (LCP 1)]

Into a reaction vessel equipped with a stirrer, a torque meter, a nitrogen-gas introducing tube, a thermometer, and a reflux cooler, 994.5 g (7.2 mol) of p-hydroxybenzoic acid, 299.0 g (1.8 mol) of terephthalic acid, 99.7 g (0.6 mol) of isophthalic acid, 446.9 g (2.4 mol) of 4,4'-dihydroxybiphenyl, and 1347.6 g (13.2 mol) of acetic anhydride were added, gas in the reaction vessel was substituted with nitrogen gas, then 0.18 g of 1-methylimidazole was added, and the mixture was heated from a room temperature to 150°C over 30 minutes with stirring under a nitrogen gas flow for refluxing at 150°C for 30 minutes.

Then, 2.4 g of 1-methylimidazole was added, the mixture was heated from 150°C to 320°C over 2 hours and 50 minutes while evaporating acetic acid byproduct and unreacted acetic anhydride, and a time when a torque increase was observed, the content was taken out from the reaction vessel and cooled to a room temperature to obtain a prepolymer, a solidified product.

Then, this prepolymer was crushed by using a crushing machine, the obtained crushed product was heated, under a nitrogen atmosphere, from a room temperature to 250°C over 1 hour, heated from 250°C to 295°C over 5 hours, and maintained at 295°C for 3 hours to perform a solid-phase polymerization.

The obtained solid-phase polymerized product was cooled to a room temperature to obtain a powder liquid crystal polyester resin (LCP 1). The obtained liquid crystal polyester resin (LCP 1) had a flow starting temperature of 327°C.

The liquid crystal polyester resin (LCP 1) had the repeating unit (1) in which Ar¹ represented a 1,4-phenylene group at 60%, the repeating unit (2) in which Ar² represented a 1,4-phenylene group at 15%, the repeating unit (2) in which Ar² represented a 1,3-phenylene group at 5%, and the repeating unit (3) in which Ar³ represented a 4,4'-biphenylylene group and X and Y represented oxygen atoms at 20%, based on the total number of all the repeating units.

### [Manufacturing Example 2: Manufacture of Liquid Crystal Polyester Resin (LCP 2)]

Into a reaction vessel equipped with a stirrer, a torque meter, a nitrogen-gas introducing tube, a thermometer, and a reflux cooler, 1034.99 g (5.5 mol) of 6-hydroxy-2-naphthoic acid, 378.33 g (1.75 mol) of 2,6-naphthalenedicarboxylic acid, 83.07 g (0.5 mol) of terephthalic acid, 272.52 g (2.475 mol: excessive by 0.225 mol based on the total amount of 2,6-naphthalenedicarboxylic acid and terephthalic acid) of hydroquinone, 1226.87 g (12 mol) of acetic anhydride, and 0.17 g of 1-methylimidazole as a catalyst were added, gas in the reaction vessel was substituted with nitrogen gas, and then the mixture was heated from a room temperature to 145°C over 15 minutes with stirring under a nitrogen gas flow for refluxing at 145°C for 1 hour. Then, the mixture was heated from 145°C to 310°C over 3 hours and 30 minutes while evaporating acetic acid byproduct and unreacted acetic anhydride, maintained at 310°C for 3 hours, and then the content was taken out and cooled to a room temperature. The obtained solidified product was crushed with a crushing machine into a particle diameter of approximately 0.1 to 1 mm, then heated, under a nitrogen atmosphere, from a room temperature to 250°C over 1 hour, heated from 250°C to 310°C over 10 hours, and maintained at 310°C for 5 hours to perform a solid-phase polymerization. After the solid-phase polymerization, the product was cooled to obtain a powder liquid crystal polyester resin (LCP 2). The obtained liquid crystal polyester resin (LCP 2) had a flow starting temperature of 324°C.

The liquid crystal polyester resin (LCP 2) had the repeating unit (1) in which Ar¹ represented a 2,6-naphthylene group at 55%, the repeating unit (2) in which Ar² represented a 2,6-phenylene group at 17.5%, the repeating unit (2) in which Ar² represented a 1,4-phenylene group at 5%, and the repeating unit (3) in which Ar³ represented a 1,4-phenylene group and X and Y represented oxygen atoms at 22.5%, based on the total number of all the repeating units.

### [Manufacturing Example 3: Manufacture of Liquid Crystal Polyester (LCP 3)]

Into a reaction vessel equipped with a stirrer, a torque meter, a nitrogen-gas introducing tube, a thermometer, and a reflux cooler, 994.5 g (7.2 mol) of p-hydroxybenzoic acid, 239.2 g (1.44 mol) of terephthalic acid, 159.5 g (0.96 mol) of isophthalic acid, 446.9 g (2.4 mol) of 4,4'-dihydroxybiphenyl, and 1347.6 g (13.2 mol) of acetic anhydride were added, gas in the reaction vessel was substituted with nitrogen gas, then 0.18 g of 1-methylimidazole was added, and the mixture was heated from a room temperature to 150°C over 30 minutes with stirring under a nitrogen gas flow for refluxing at 150°C for 30 minutes. Then, 2.4 g of 1-methylimidazole was added, the mixture was heated from 150°C to 320°C over 2 hours and 50 minutes while evaporating acetic acid byproduct and unreacted acetic anhydride, and a time when a torque increase was observed, the content was taken out from the reaction vessel and cooled to a room temperature. The obtained solidified product was crushed with a crushing machine, heated, under a nitrogen atmosphere, from a room temperature to 220°C over 1 hour, heated from 220°C to 240°C over 30 minutes, and maintained at 240°C for 10 hours to perform a solid-phase polymerization, and then cooled to obtain a powder liquid crystal polyester resin (LCP 3). The obtained liquid crystal polyester resin (LCP 3) had a flow starting temperature of 286°C.

The liquid crystal polyester resin (LCP 3) had the repeating unit (1) in which Ar¹ represented a 1,4-phenylene group at 60%, the repeating unit (2) in which Ar² represented a 1,4-phenylene group at 12%, the repeating unit (2) in which Ar² represented a 1,3-phenylene group at 8%, and the repeating unit (3) in which Ar³ represented a 4,4'-biphenylylene group and X and Y represented oxygen atoms at 20%, based on the total number of all the repeating units.

### [Manufacturing Example 4: Manufacture of Liquid Crystal Polyester (LCP 4)]

Into a reaction vessel equipped with a stirrer, a torque meter, a nitrogen-gas introducing tube, a thermometer, and a reflux cooler, 994.5 g (7.2 mol) of p-hydroxybenzoic acid, 365.4 g (2.2 mol) of terephthalic acid, 33.2 g (0.2 mol) of isophthalic acid, 446.9 g (2.4 mol) of 4,4'-dihydroxybiphenyl, 1347.6 g (13.2 mol) of acetic anhydride, and 0.194 g of 1-methylimidazole as a catalyst were added, the mixture was stirred at a room temperature for 15 minutes, an inside of the reaction vessel was sufficiently substituted with nitrogen gas, and then the mixture was heated with stirring. At a time when the inner temperature reached 145°C, the mixture was stirred for 1 hour with holding the same temperature. Thereafter, the obtained prepolymer was cooled to a room temperature while evaporating acetic acid byproduct and unreacted acetic anhydride, and crushed with a crushing machine to obtain a liquid crystal polyester powder (a particle diameter was approximately 0.1 mm to approximately 1 mm). Thereafter, this liquid crystal polyester powder was heated, under a nitrogen atmosphere, from a room temperature to 300°C over 5 hours to proceed a solid-phase polymerization reaction, and then cooled to obtain a powder liquid crystal polyester resin (LCP 4). The liquid crystal polyester resin (LCP 4) had a flow starting temperature of 361°C.

The liquid crystal polyester resin (LCP 4) had the repeating unit (1) in which Ar¹ represented a 1,4-phenylene group at 60%, the repeating unit (2) in which Ar² represented a 1,4-phenylene group at 18%, the repeating unit (2) in which Ar² represented a 1,3-phenylene group at 2%, and the repeating unit (3) in which Ar³ represented a 4,4'-biphenylylene group and X and Y represented oxygen atoms at 20%, based on the total number of all the repeating units.

### [Preparation of Fluororesin]

As a first fluororesin, high molecular-weight PTFE (trade name "Fluon(R) L169J", manufactured by AGC Inc.) was prepared.

As a second fluororesin, low molecular-weight PTFE (trade name "Dyneon TF9205", manufactured by 3M Company) was prepared.

### [Measurement 1 of Endothermic Peak of Fluororesin]

Endothermic peaks of the first fluororesin and the second fluororesin, when heated at a rate of 1 °C/min by using a differential scanning calorimeter (trade name "DSC-50", manufactured by SHIMADZU CORPORATION), were measured.

As a result, the endothermic peak of the first fluororesin was 330°C. The endothermic peak of the second fluororesin was 324°C.

### <Manufacture of Molded body>

### (Example 1)

A pellet-shaped resin composition was fed into an injection-molding machine UH1000 (manufactured by NISSEI PLASTIC INDUSTRIAL CO., LTD.) at a cylinder temperature of 340°C, and injected into a mold at a mold temperature of 120°C with an injecting speed of 20 mm/s, the number of screw rotation of 100 rpm, a holding pressure of 50 MPa, and a back pressure of 3 MPa to produce an injection-molded specimen with 64 mm × 64 mm × 3 mmt (surface roughness Ra = 3 µm) .

### [Measurement 2 of Endothermic Peak of Fluororesin]

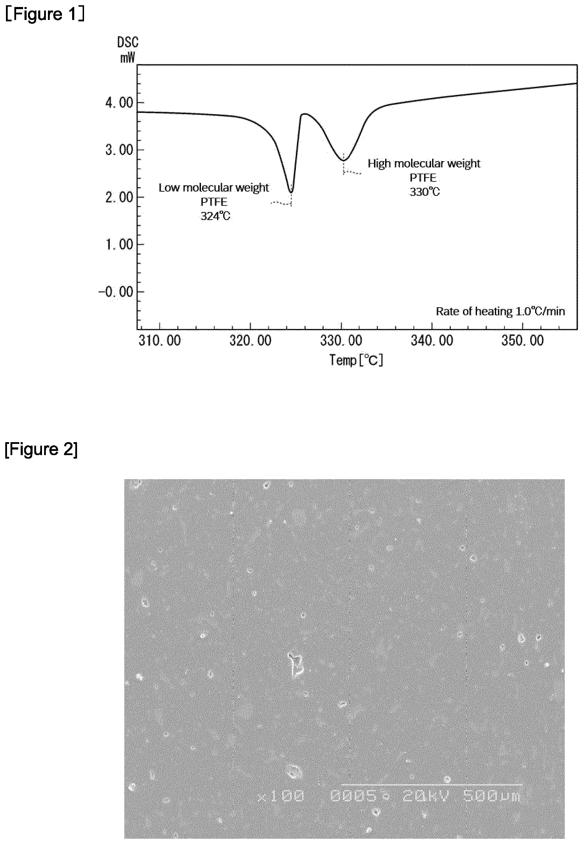

The pellet-shaped resin composition of Example 1 was decomposed by amine, and only the fluororesins were extracted to measure endothermic peaks of the fluororesins in the pellet-shaped resin composition of Example 1 in the same manner as in the [Measurement 1 of Endothermic Peak of Fluororesin]. The results are shown in Figure 1.

As shown in Figure 1, observed were an endothermic peak at 330°C derived from the first fluororesin and an endothermic peak at 324°C derived from the second fluororesin.

Accordingly, it is presumed that the fluororesins in the pellet-shaped resin compositions of Examples 2 to 6 also exhibit the endothermic peak at 330°C derived from the first fluororesin and the endothermic peak at 324°C derived from the second fluororesin.

### [Evaluation of Average Particle Diameter of Fluororesin]

An average particle diameter of the fluororesin in the resin composition of each Example was determined by image analysis of an SEM image.

Specifically, the pellet-shaped resin composition of each Example was subjected to a cross-sectional process treatment by using a cross-sectional sample producing apparatus ("Cross-Section Polisher SM-09010", manufactured by JEOL Ltd.) under a condition of an acceleration voltage of 4.5 kV for 20 hours. Then, the cross-sectional image of the pellet-shaped resin composition of each Example was photographed by using a scanning electron microscope ("S-4800", manufactured by Hitachi High-Tech Corporation) under a condition of an acceleration voltage of 10 kV. The cross-sectional image was photographed by using an attached YAG-type backscattered electron detector under a condition of an observation magnification of 500. Then, an image analysis software ("WinROOF" Ver. 3.54, manufactured by MITANI CORPORATION) was used to determine the average particle diameter of the fluororesin in the resin composition by the following analytical method.

### <<Analytical Method>>

The obtained cross-sectional image was used and subjected to a median treatment with a filter size of 5×5, and then a region comprising the liquid crystal polyester resin and a region comprising the fluororesin were subjected to a binarizing treatment (a threshold value of the binarizing treatment was set to 100). The image after the treatment was used to remove noise and a region with a cut image on the end thereof, and then 150 circle-equivalent diameters of the fluororesin regions were measured. An average value of the obtained measured values was calculated and specified as the average particle diameter of the fluororesin in the resin composition.

Tables 1 and 2 show the results as "Average particle diameter of fluororesin (µm)".

### [Evaluation of Limit PV Value]

A limit PV value of the molded body of each Example was determined by using a Suzuki-type frictional wearing tester (ring-on-disk). Specifically, a metal ring coated with a silicone oil having a kinematic viscosity at 25°C of 450 to 600 Pa·s was placed on the molded body of each Example, and a load is gradually applied with rotating the metal ring. A load (stress) where a surface of the molded body of each Example was chipped - 20 N was determined to calculate the limit PV value (MPa·m/min) with the following formula. Limit PV value (MPa·m/min) = Stress • Test rate (40 m/min)

The specific measurement conditions are as follows.
Object material: SUS304 (Ra: 0.02 mm or less)
Measurement temperature: 25°C
Test rate: 40 m/min
Load profile: 50 N for 5 minutes, 100 N for 3 minutes, and more than 100 N with increasing the load at each 20 N to perform the test for each 1 minute
Contacting area between ring and molded body: 2.0 cm²

Tables 1 and 2 show the results as "Limit PV value (MPa-m/min)". The "Limit PV value (MPa.m/min)" indicates a limit of deformation or melting of a sliding surface of a material due to frictional heat generation, and is an indicator of a sliding property. A larger value thereof means a better sliding property.

**[Table 1]**

| | | Example 1 | Example 2 | Example 3 | Example 4 | Example 5 | Example 6 | Example 7 |
|---|---|---|---|---|---|---|---|---|
| Liquid crystal polyester resin | LCP1 | 78 | 75 | 60 | 75 | 55 | 55 | 2 |
| | LCP2 | 2 | 5 | 20 | - | 5 | 5 | 78 |
| | LCP3 | - | - | - | 5 | - | - | - |
| Fluororesin | PTFE1 | 10 | 10 | 10 | 10 | 10 | 10 | 10 |
| | PTFE2 | 10 | 10 | 10 | 10 | 10 | 10 | 10 |
| Filler | M1 | - | - | - | - | 20 | - | - |
| | M2 | - | - | - | - | - | 20 | - |
| Average particle diameter of fluororesin | [*µ*m] | 8.3 | 7.2 | 6.7 | 8.4 | 4.3 | 5.2 | 8.5 |
| Limit PV value | [MPa · m/min] | 94 | 171 | 163 | 98 | 184 | 188 | 132 |

**[Table 2]**

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Liquid crystal polyester resin | LCP1 | 80 | 75 | 75 | 75 | 80 | 80 | 45 | 45 |
| | LCP3 | - | - | - | - | - | - | 35 | 35 |
| | LCP4 | - | 5 | - | - | - | - | - | - |
| Polyether sulfone | PES1 | - | - | 5 | 5 | - | - | - | - |
| Fluororesin | PTFE1 | 10 | 10 | 10 | 18 | 20 | - | 10 | - |
| | PTFE2 | 10 | 10 | 10 | 2 | - | 20 | 10 | 20 |
| Average particle diameter of fluororesin | [*µ*m] | 26.3 | >50 | 36.2 | 35.4 | 4.0 | 34.4 | 22.3 | 35.2 |
| Limit PV value | [MPa · m/min] | 41 | 57 | 53 | 53 | 80 | 68 | 68 | 64 |

Each abbreviation in Tables 1 and 2 has the following meaning. Values in Tables represent contents (% by mass) based on the resin composition being 100 % by mass.
LCP 1 to LCP 4: The aforementioned liquid crystal polyester resins LCP 1 to LCP 4
PTFE 1: Low molecular weight PTFE (trade name "Dyneon(R) TF9205", manufactured by 3M Company)
PTFE 2: High molecular-weight PTFE (trade name "Fluon(R) L169J", manufactured by AGC Inc.)
PES 1: Polyether sulfone (trade name "SUMIKAEXCEL(R) PES 5003P", manufactured by SUMITOMO CHEMICAL COMPANY, LIMITED)
M1: Mica (trade name "YM-25S", manufactured by YAMAGUCHI MICA CO., LTD.)
M2: Titanium oxide (trade name "CR60", manufactured by ISHIHARA SANGYO KAISHA, LTD.)

As shown in Tables 1 and 2, the molded bodies produced by using the resin compositions of Examples have been confirmed to have higher limit PV values and a higher sliding property than the molded bodies produced by using the resin compositions of Comparative Examples.

Figures 2 to 6 are SEM images of the cross sections of the pellet-shaped resin composition of each Example. In Figures 2 to 6, the continuous phase is the liquid crystal polyester resin and the dispersed phase is the fluororesin.

Figure 2 is a SEM image of the resin composition of Example 1. In the resin composition of Example 1, the fluororesin can be observed to be uniformly dispersed. Thus, it was presumed that the molded body produced by using the resin composition of Example 1 had the high limit PV value.

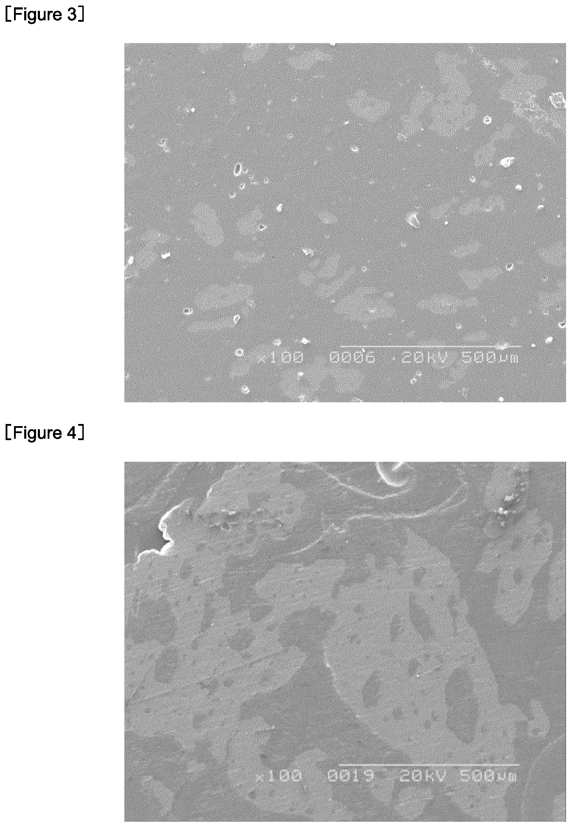

Figures 3 and 4 are SEM images of the resin compositions of Comparative Examples 1 and 2, respectively. In the resin compositions of Comparative Examples 1 and 2, the fluororesin can be observed to aggregate. Thus, it was presumed that the molded bodies produced by using the resin compositions of Comparative Examples 1 and 2 had the low limit PV value.

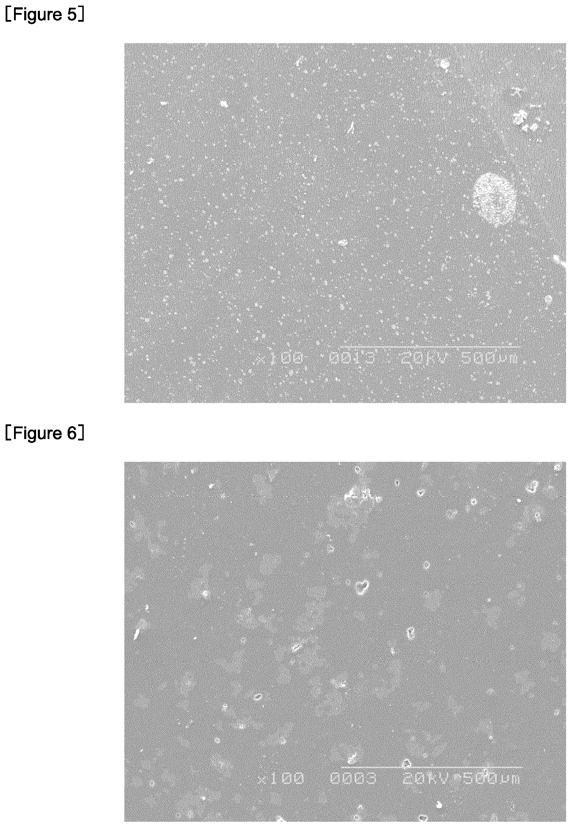

Figure 5 is an SEM image of the resin composition of Comparative Example 5. Since the resin composition of Comparative Example 5 comprised only a fluororesin with a low molecular weight, the fluororesin was uniformly dispersed. Meanwhile, the low molecular-weight fluororesin itself did not have high durability and easily removed from the molded body, and thereby it was presumed that the molded body produced by using the resin composition of Comparative Example 5 had the low limit PV value.

Figure 6 is an SEM image of the resin composition of Comparative Example 6. Since the resin composition of Comparative Example 6 comprised only a fluororesin with a high molecular weight, the fluororesin can be observed to aggregate. Thus, it was presumed that the molded body produced by using the resin composition of Comparative Example 6 had the low limit PV value.

The preferable Examples of the present invention have been described above, but the present invention is not limited to these Examples. Addition, omission, substitution, and other modifications of the constitutions can be made within a range not departing from the object of the present invention. The present invention is not limited to the aforementioned description, but limited only to the scope of the attached Claims.

## Claims

1. A resin composition comprising:
a liquid crystal polyester resin; and
a fluororesin, wherein
the fluororesin has an average particle diameter of 20 µm or less as determined by image analysis of an SEM image of the fluororesin, and
when an endothermic peak is measured with heating at a rate of 1 °C/min using a differential scanning calorimeter, the fluororesin exhibits a first endothermic peak temperature of 328°C or higher and a second endothermic peak temperature of 325°C or lower.

2. The resin composition according to Claim 1, wherein the first endothermic peak temperature is 328°C or higher and 333°C or lower, and the second endothermic peak temperature is 320°C or higher and 325°C or lower.

3. The resin composition according to Claim 1 or 2, wherein the fluororesin comprises a first fluororesin that exhibits the first endothermic peak temperature and a second fluororesin that exhibits the second endothermic peak temperature.

4. The resin composition according to any one of Claims 1 to 3, wherein the liquid crystal polyester resin comprises a repeating unit having a 2,6-naphthylene group.

5. The resin composition according to any one of Claims 1 to 4, further comprising a filler.

6. The resin composition according to any one of Claims 1 to 5, wherein a content of the fluororesin is 20 to 40 parts by mass based on 100 parts by mass of the liquid crystal polyester resin.

7. A molded body produced by using the resin composition according to any one of Claims 1 to 6.
